# EUROPEAN PATENT APPLICATION

(11) **EP 2 221 433 A2**
(43) Date of publication of application: **25.08.2010**
(21) Application number: 10153971.6
(22) Date of filing: 18.02.2010
(51) Int. Cl.: E04F 15/18

(54) **Floor insulation structure**

(30) Priority: 19.02.2009 FI 20095158
(71) Applicant: Uponor Innovation Ab, 73061 Virsbo (SE)
(72) Inventor: Järvinen, Tomi, 15170 Lahti (FI)
(74) Representative: Huhtanen, Ossi Jaakko

(57) **Abstract**

The invention relates to an insulation structure (1) for sound and heat insulation of floors. The insulation structure (1) comprises at least two layers made from an at least partially closed-cell foam plastic material. Of these layers, the layer that in an operation position is the upper layer (2) is substantially non-perforated, and the layer that in the operating position is the lower layer (3) is provided with apertures (4) for reducing tension and tightness of the material. This solution enables the sound insulation properties of the insulation structure to be improved.

## Description

### BACKGROUND OF THE INVENTION

The invention relates to an insulation structure for sound and heat insulation of floors.

The invention further relates to a method of forming a floor insulation structure.

Owing to their heat insulating properties in particular, EPS (Expanded Polystyrene) materials are commonly used in floor structures. However, a problem with these EPS materials is sound insulation. Indeed in practice, a vast majority of complaints about sound insulation problems concern the use of these EPS materials. Even if such EPS materials and floor structure solutions could meet the minimum requirements set e.g. by the Finnish building code for the impact sound level, i.e. structure-borne noise audible in other spaces, typically these solutions are not, however, sufficient as far as an attractive living environment is concerned.

It is also known to use mineral wool in the insulation structures of floor structures. A mineral wool material is less expensive and has better sound insulation properties than an EPS material but, in conjunction with floor heating, its installation necessitates a steel wire net for fastening pipes, which makes the installation slower and more cumbersome.

Comfort and energy saving factors, for instance, have contributed to the increasing popularity of floor heating in new buildings in particular. Various solutions for the installation of floor heating are known from EP 0 346 529, DE 3 730 144, and DE 3 125 318. However, many typical floor heating solutions further reduce the sound insulation capacity of the structures, particularly at impact sound levels.

### BRIEF DESCRIPTION OF THE INVENTION

An object of the present invention is to provide a novel and improved sound and heat insulation structure of floors.

A method according to the invention is characterized by forming at least one layer of a substantially non-perforated and at least partially closed-cell foam plastic material, forming at least one layer of a perforated and at least partly closed-cell foam plastic material, and combining the layers to form an insulation structure or a part thereof.

An insulation structure according to the invention is **characterized in that** the structure comprises at least two layers made from an at least partially closed-cell foam plastic material, wherein the layer that in an operating position is the upper layer is substantially non-perforated, and the layer that in the operation position is the lower layer is provided with apertures for reducing tension and tightness of the material in order to improve sound insulation properties of the structure.

An idea underlying the invention is that the floor insulation structure comprises at least two layers formed from a closed-cell foam plastic material, and the layer that in an operating position is the lower layer is perforated. The perforation enables the tension and tightness of this lower layer to be reduced. The layer that in the operating position is the upper layer is substantially non-perforated, and these layers are combined to form an isolation structure or a part thereof.

An advantage of the invention is that by reducing the tension and tightness of the layer that in the operating position is the lower layer, the perforation of the material may be used for significantly reducing the propagation of low-frequency sounds in particular in the material. When this layer is combined with another, substantially non-perforated layer, and when these layers are made from a closed-cell foam plastic material, a sound and heat insulation structure of floors is achieved that has good sound insulation properties also at low impact sound frequencies. This is advantageous particularly as far as the sound insulation of intermediate floors between flats or apartments is concerned, since it is particularly the low impact sound frequencies that typically cause most inconvenience and complaints.

### BRIEF DESCRIPTION OF THE FIGURES

Some embodiments of the invention are described in closer detail in the accompanying drawings, in which
Figure 1 is a schematic side view showing a floor insulation structure,
Figure 2 schematically shows a detail of a perforated layer, as seen from below,
Figures 3a to 3d schematically show various cutting patterns in some perforated layers, as seen from below,
Figure 4 schematically shows a detail of a cutting pattern formation stretched open,
Figures 5a to 5b schematically show a detail of an embodiment wherein an insulation structure is used as an installation base for floor heating, in Figure 5a as seen from above and in Figure 5b in a direction of section A-A, and
Figures 6a to 6b schematically show a detail of another embodiment wherein an insulation structure is used as an installation base for floor heating, in Figure 6a as seen from above and in Figure 6b in a direction of section B-B.

For the sake of clarity, the figures show some embodiments of the invention in a simplified manner, and the figures and/or details thereof are not in scale with one another. In the figures, like reference numerals identify like elements.

### DETAILED DESCRIPTION OF THE INVENTION

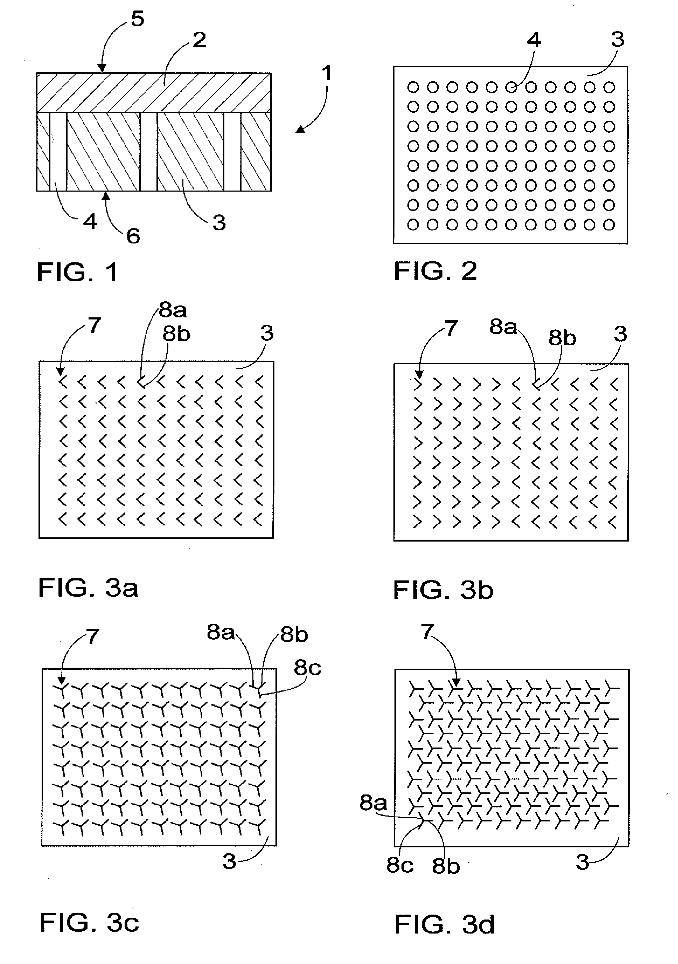

Figure 1 is a schematic side view showing an insulation structure 1. The insulation structure comprises at least two layers: an upper layer 2 and a lower layer 3. In different embodiments different layers may be added above, below, or between the upper layer 2 and the lower layer 3 as necessary and appropriate. Both the upper layer 2 and the lower layer 3 may be formed from an at least partly closed-cell foam plastic material, preferably from cross-linked or non-crosslinked partly or entirely closed-cell foam polyethylene. The material may thus be e.g. a closed-cell foam plastic material, or a combination of a closed-cell and open-cell foam plastic material. The materials of the layers may be mutually the same, or they may differ from one another in composition, structure, or in another corresponding manner. The upper layer 2 may have a thickness of preferably 10 to 20 mm while the lower layer 3 may have a thickness of preferably 10 to 30 mm.

The layer that in the figure as well as in the real operating position is the lower layer 3 of the insulation structure 1 is provided with apertures. This reduces the tension and tightness of the material, which, in turn, reduces the conveyance of impact sounds in the material particularly at low frequencies, as compared with a corresponding material having no apertures. When the insulation structure is subjected to a load from above, the apertures enable the lower layer of the insulation material to yield laterally in the direction of the aperture. It is advantageous for a material to have a good resilience, i.e. when the insulation material yields on account of the load, it will quite quickly return to the shape it had before it was subjected to the load.

The layer that in the figure as well as in the real operating position is the upper layer 2 of the insulation structure 1 is substantially non-perforated. Thus, the upper layer 2 may have or, during installation, it may be provided with openings e.g. for floor heating fasteners; nevertheless, the material is still substantially uniform. When the lower layer 3 and the upper layer 2 are combined on top of one another as shown in the figure, the combination damps impact sounds of different types better than a perforated or non-perforated material as such. In addition, the substantially non-perforated upper layer 2 forms a uniform surface e.g. for further installations, so the apertures of the lower layer 3 do not continue uniformly to an upper surface 5 of the insulation structure 1. This is advantageous also e.g. when a layer of a material, such as a filler, concrete or the like, that is in a fluent form, such as in a powdery, granular, or fluid form, is to be arranged on top of the insulation structure 1. In such a case, the fluent material is prevented from entering into the apertures, wherein it might deteriorate the operation of the apertures in sound insulation.

In terms of its material and dimensions, the insulation structure may be made such that it works better when a certain load is already provided thereabove. This load may be formed e.g. by a concrete layer to be arranged on top of the insulation structure. An appropriate load may be e.g. about 90 kg/m².

Figure 2 shows a detail of a lower layer 3, as seen from below. In such a case, the layer formed from an at least partly closed-cell foam plastic material is provided with apertures 4. These apertures 4 continue substantially through the lower layer 3 in the operating position from bottom to top, either perpendicularly with respect to a lower surface 6, at an angle, or in another direction advantageous to a given purpose of use.

Figures 3a to 3d show various cutting patterns 7 and cutting pattern formations by which the apertures 4 of the lower layer 3 may be formed in different embodiments. In Figures 3a and 3b, the cutting patterns are formed from two cuts 8a, 8b that proceed from substantially the same point in different directions. In Figure 3a, all cutting patterns 7 are formed in the same direction while in Figure 3b the cutting patterns 7 in the cutting pattern formation are arranged in two different directions.

Figures 3c and 3d show cutting patterns 7 comprising three cuts 8a, 8b, 8c that proceed from substantially the same point in different directions. Apertures formed using such a cutting pattern 7 are easy to stretch to an open position, and the apertures thus formed are advantageous as far as sound insulation is concerned. In different embodiments, the cutting pattern 7 may comprise even more than three cuts. In Figure 3c, the cutting patterns 7 are arranged substantially separately, whereas in Figure 3d the cutting patterns 7 are arranged mutually partly overlappingly. Such an arrangement of the cutting patterns 7 at least partly overlappingly further improves the sound insulation properties of the insulation structure 1. In addition, such an arrangement of the cutting patterns does not reduce the load bearing capacity of the material too much.

In different embodiments, the cutting patterns 7 may be arranged in formations in one or more directions, and/or a cutting pattern formation may consist of one or more cutting pattern types 7. Further, in different embodiments, a circular opening may be arranged at a starting-point wherefrom cuts 8a, 8b, 8c proceed in different directions.

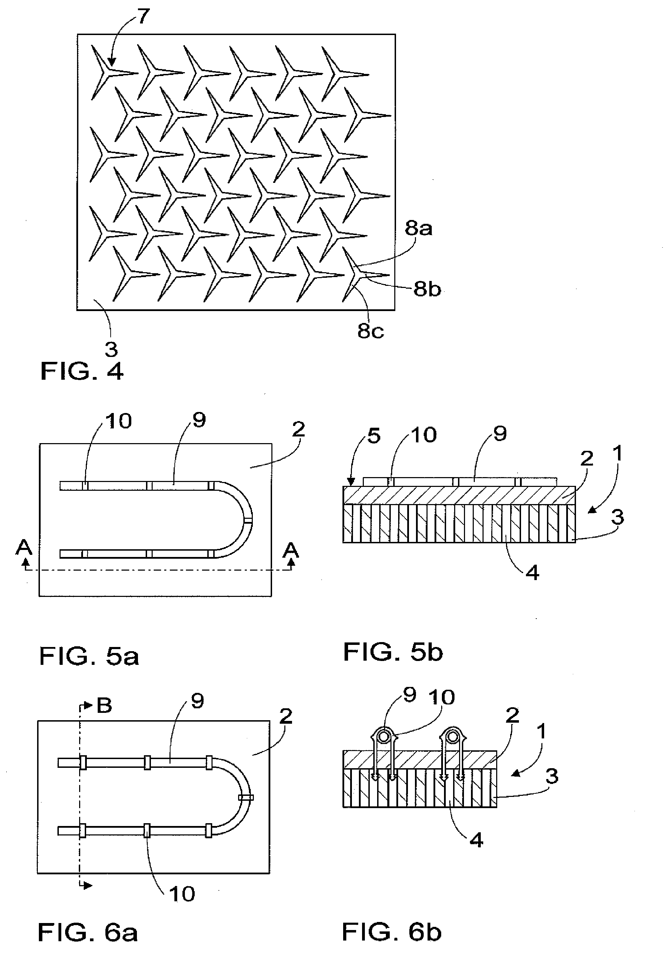

Figure 4 schematically shows a detail of the cutting pattern formation shown in Figure 3d such that the cutting patterns 7 are stretched to an open position in order to form open apertures 4. As discussed above, the apertures 4 should be open in the operation conditions of the insulation structure in order to reduce the tension and tightness of the material and thus in order to achieve as advantageous sound insulation properties as possible. The apertures 4 formed by the cutting patterns 7 may be brought to the open position e.g. by stretching the cutting-patterned material such that the apertures 4 open, and by connecting the thus stretched lower layer 3 e.g. by lamination to the upper layer 2, in which case the apertures 4 remain in the open position, or in another appropriate way, such as by laminating the apertures of the lower layer 3 into the open position prior to connecting it to the upper layer 2.

Figure 5a schematically shows a detail of an embodiment as seen from above, wherein the insulation structure 1 described in the present application is used as an installation base for floor heating. In this embodiment, a floor heating pipe 9 is connected to the upper surface 5 of the upper layer 2 of the insulation structure 1 by using a fastening tape 10 known per se. The fastening tape 10 and, correspondingly, the part of the upper surface 5 of the upper layer 2 that is in contact with at least the floor heating pipe 9 are made from materials which stick to one another, keeping the floor heating pipe 9 fastened to the upper surface 5. This fastening manner is known per se, as is the fact that the fastening tape 10 may be connected to the floor heating pipe 9 in a transverse manner, as shown in Figure 5a, or in another appropriate manner, such as in a longitudinal direction of the pipe 9, or by winding the pipe 9 spirally. Figure 5b schematically shows the corresponding detail in a direction of section A-A.

Figure 5b schematically shows a detail of another embodiment as seen from above, wherein the insulation structure 1 described in the present application is also used as an installation base for floor heating. In this embodiment, the floor heating pipe 9 is fastened to the insulation structure 1 by fasteners 11 known per se. Figure 6b schematically shows the corresponding detail in a direction of section B-B. The embodiments shown in Figures 5a to 5b and 6a to 6b are only examples of how the floor heating pipes 9 may be connected to the insulation structure 1. In different embodiments, different fastening manners known per se may also be combined as necessary.

In some embodiments, the upper layer 2 may be provided with structures, such as grooves, for the installation of floor heating pipes 9. The grooves may be arranged in the insulation material e.g. by pressing or engraving.

In some cases, the features disclosed in the present application may be used as such, irrespective of other features. On the other hand, the features disclosed in the present invention may be combined in order to produce different combinations, when necessary.

The drawings and the related description are only intended to illustrate the idea of the invention. The details of the invention may vary within the scope of the claims.

## Claims

1. An insulation structure for sound and heat insulation of floors, **characterized in that** the structure comprises at least two layers made from an at least partially closed-cell foam plastic material, wherein the layer that in an operating position is the upper layer (2) is substantially non-perforated, and the layer that in the operation position is the lower layer (3) is provided with apertures (4) for reducing tension and tightness of the material in order to improve sound insulation properties of the structure.

2. An insulation structure as claimed in claim 1, **characterized in that** the apertures (4) of the layer that in the operating position is the lower layer (3) are formed as cutting patterns (7) stretchable to an open position.

3. An insulation structure as claimed in claim 2, **characterized in that** the cutting pattern (7) consists of at least two cuts (8a, 8b, 8c) that proceed from a substantially same point in different directions.

4. An insulation structure as claimed in claim 2 or 3, **characterized in that** adjacent cutting patterns (7) are arranged at least partly overlappingly.

5. An insulation structure as claimed in any one of the preceding claims, **characterized in that** the layers (2, 3) are made from cross-linked or non-crosslinked closed-cell foam polyethylene.

6. An insulation structure as claimed in any one of the preceding claims, **characterized in that** the structure is an installation base for floor heating pipes (9).

7. An insulation structure as claimed in claim 6, **characterized in that** the upper layer (2) is provided with structures, such as grooves, for installation of the floor heating pipes (9).

8. A method of manufacturing a floor insulation structure, **characterized by** forming at least one layer of a substantially non-perforated and at least partially closed-cell foam plastic material, forming at least one layer of a perforated and at least partly closed-cell foam plastic material, and combining the layers to form an insulation structure (1) or a part thereof.

9. A method as claimed in claim 8, **characterized by** forming apertures (4) of the perforated layer as cutting patterns (7).

10. A method as claimed in claim 9, **characterized by** forming the cutting patterns (7) from at least two cuts (8a, 8b, 8c) which proceed from a substantially same point in different directions.

11. A method as claimed in claim 9 or 10, **characterized by** arranging adjacent cutting patterns (7) at least partly overlappingly.

12. A method as claimed in any one of claims 9 to 11, **characterized by** stretching the cutting patterns (7) in order to form the apertures (4).

13. A method as claimed in claim 12, **characterized by** fastening a perforated layer in a stretched form to a non-perforated layer.

14. A method as claimed in any one of claims 8 to 13, **characterized by** forming the layers from cross-linked or non-crosslinked closed-cell foam polyethylene.

15. A method as claimed in any one of claims 8 to 14, **characterized by** the insulation structure (1) constituting an installation base for floor heating pipes (9).
